# EUROPEAN PATENT SPECIFICATION

(11) **EP 1 762 320 B1**
(45) Date of publication and mention of the grant of the patent: **25.08.2010**
(21) Application number: 06018994.1
(22) Date of filing: 11.09.2006
(51) Int. Cl.: B23B 27/10, B23B 27/00, B23B 29/02, B23Q 11/10

(54) **Boring tool with coolant hole**
Bohrwerkzeug mit Kühlmittelbohrung
Outil de perçage avec ouverture pour fluide de refroidissement

(30) Priority: 13.09.2005 JP 2005265371
(43) Date of publication of application: 14.03.2007
(73) Proprietor: Sumitomo Electric Hardmetal Corp., Itami-shi, Hyogo 664-0016 (JP)
(72) Inventor: Murakami, Daisuke, 1-1, Koyakita 1-chome Itami-shi Hyogo (JP); Ueda, Masanobu, 1-1, Koyakita 1-chome Itami-shi Hyogo (JP)
(74) Representative: Grünecker, Kinkeldey, Stockmair & Schwanhäusser Anwaltssozietät

(56) References cited:
- EP-A- 1 224 992
- JP-A- 2003 071 608
- SANDVIK COROMANT: "Metal working products turning tools" 1 January 2000 (2000-01-01), , SWEDEN , XP002515469 * page A132 *

## Description

### BACKGROUND OF THE INVENTION

### Field of the Invention

The present invention relates to a boring tool with coolant hole for machining the inner diameter of a hole according to the preamble of claim 1. Such a boring tool is known from document EP-A-1224992. More specifically, the present invention relates to a boring tool with coolant hole with a feature for spraying a cut section with a coolant. The coolant referred to in the present invention is not restricted to fluid. It also covers vapors containing lubricant used in minimum quantity lubricant (MQL) cutting.

### Description of the Background Art

Examples of conventional technologies for boring tools with coolant holes include Japanese Laid-Open Patent Publication Number 2003-71608 and Japanese Laid-Open Patent Publication Number 2005-81459.

In the boring tool disclosed in Japanese Laid-Open Patent Publication Number 2003-71608, in order to ease the machining of a spray opening (nozzle) of a coolant hole opened on a sloped surface of a cut-out (pocket) at a shank tip, the axial center of the spray opening (nozzle) is sloped to increase the angle of intersection with the sloped surface. The resulting offset of the direction at which the coolant is sprayed is compensated by providing a secondary flow path that directs a portion of the sprayed coolant to a cutting edge of a cutting section and by providing a large-diameter section for the nozzle exit.

In the boring tool disclosed in Japanese Laid-Open Patent Publication Number 2005-81459, the object is to maximize the lubrication and cooling effects provided by the coolant when coolant is supplied in an accurate manner and coolant usage is reduced. A retractable nozzle for the cutting section is mounted on a shank (main tool body), and the coolant supplied through a coolant hole (oil hole) is sprayed from the nozzle toward a cutting edge of a cutting tool.

As shown in Fig. 10, in the boring tools of Japanese Laid-Open Patent Publication Number 2003-71608 and Japanese Laid-Open Patent Publication Number 2006-81459, a main hole 2a of a coolant hole 2 provided at the center of a shank 1 is brought close to the tip of the shank 1, and a spray opening 3 is extended from the back end of the main hole 2a to a cutting edge 4a of a cutting tool 4 so that the coolant is pointed toward the cutting edge.

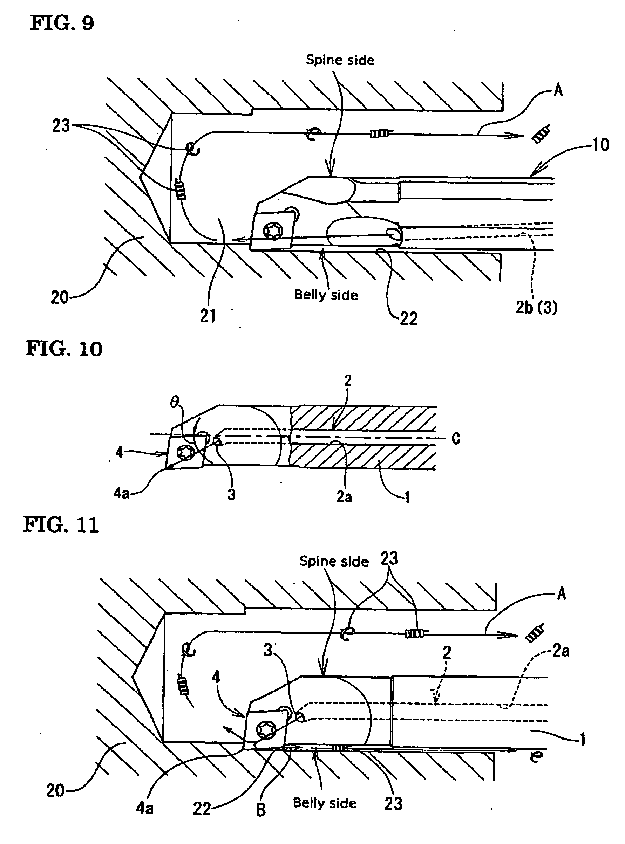

As a result, the slope angle θ of the spray opening 3 relative to an axial center C of the shank is increased. As shown in Fig. 11, the coolant coming into contact with a cut surface 22 splits into opposite directions A, B. As a result, chips 23 sprayed by the coolant are also pushed by the flow of the coolant in two directions. The chips 23 pushed by the flow in the direction B enter into a narrow space formed by the belly of the shank 1 and a workpiece 20. This may lead to damage to the cut surface (finishing surface) 22 of the workpiece 20.

Standard, conventional boring tools with coolant holes often use a shank formed from a circular rod. This leads to the problem described above because, for structural reasons, the main hole 2a of the coolant hole 2 is provided at the center of the shank 1, resulting in a large slope angle for the spray opening relative to the axial center of the shank.

### SUMMARY OF THE INVENTION

The object of the present invention is to prevent generated chips from entering into a narrow space between a belly of a shank and a workpiece and to reduce damage to a cut surface by the chips.

According to the invention, there is provided a boring tool as disclosed in claim 1. Further advantageous embodiments are presented in the dependent claims.

In order to overcome the problems described above, in the present invention the spray opening of a coolant hole formed on a shank of a boring tool is positioned offset from the shank center toward the side on which the cutting tool is positioned. The spray opening, when the boring tool is seen from a plane view, is sloped at a slope angle θ = 3-10 deg, relative to the axial center of the shank toward the cutting edge. Furthermore, a distance L of the spray opening from the cutting edge of the cutting tool is up to 3 times a shank diameter D, more preferably 1.5D · 3D.

In the boring tool with coolant hole, it would be preferable to position the spray opening of the coolant hole close to the outer perimeter of the shank when the boring tool is seen from a plane view (more preferably as close as possible to the outer perimeter).

It would also be preferable for the coolant hole to be formed from a main hole open toward the rear surface of the shank and positioned at the shank center, a secondary hole positioned offset toward the outer perimeter of the shank, and a communicating hole connecting the main hole and the secondary hole, with the secondary hole serving as the spray opening of the coolant hole.

In the boring tool of the present invention, the spray opening of the coolant hole is offset toward the side with the cutting tool, and the slope angle θ of the spray opening relative to the axial center of the shank is smaller than that of conventional boring tools. As a result, all of the sprayed coolant flows toward the tip of the shank and no flow is generated toward the belly side of the shank. Also, by setting the distance L from the spray opening to the cutting edge of the cutting tool to be at most 3 times the shank diameter, it is possible to limit the drop in coolant pressure that takes place as it travels from the spray opening to the cut section. The pressure at which the coolant blows against the cut section will not be insufficient even under standard coolant supply conditions (e.g., a spray pressure of 0.5 - 2 MPa).

As a result, the generated chips are blown away by the coolant and flow toward the tip of the shank along with the coolant. Then, the chips encounter the flow restrictions imposed by the workpiece and reverse direction at the front of the shank so that they pass along the spine of the shank and are ejected outside through the workpiece hole. Thus, abrasion of the cut surface due to chips does not take place.

Also, the next section will describe the reason there are restrictions on the slope angle θ of the spray opening of the coolant hole and the distance L from the cutting edge of the cutting tool to the spray opening, the reason that a range of 3 - 5 deg is preferable for the spray opening slope angle θ, the reason that a range of 1.5D - 3D is preferable for the distance L from the cutting edge of the cutting tool to the spray opening, and the reason that it would be preferable for the coolant hole to be formed from a main hole, a secondary hole, and a communicating hole.

### BRIEF DESCRIPTION OF THE DRAWINGS

Fig. 1 is a plane drawing showing an example of a boring tool with a coolant hole according to the present invention.
Fig. 2 is a side-view drawing of the boring tool from Fig. 1.
Fig. 3 is a plane detail drawing of the tip of the boring tool from Fig. 1.
Fig. 4 is a side-view detail drawing of the tip of the boring tool from Fig. 1.
Fig. 5 is a cross-section detail drawing along the X-X line in Fig. 1.
Fig. 6 is a cross-section detail drawing along the Y-Y line in Fig. 1.
Fig. 7 is a partially cut-away plane drawing showing a connecting section of a main hole and a secondary hole (spray opening) of a coolant hole.
Fig. 8 is a drawing for the purpose of illustrating a slope angle θ of a spray hole and a distance L from a cutting edge to the spray opening.
Fig. 9 is a cross-section drawing showing the boring tool of the present invention in use.
Fig. 10 is a drawing showing an example of a conventional boring tool with coolant hole.
Fig. 11 is a cross-section drawing showing the boring tool from Fig. 10 being used.

### DETAILED DESCRIPTION OF THE INVENTION

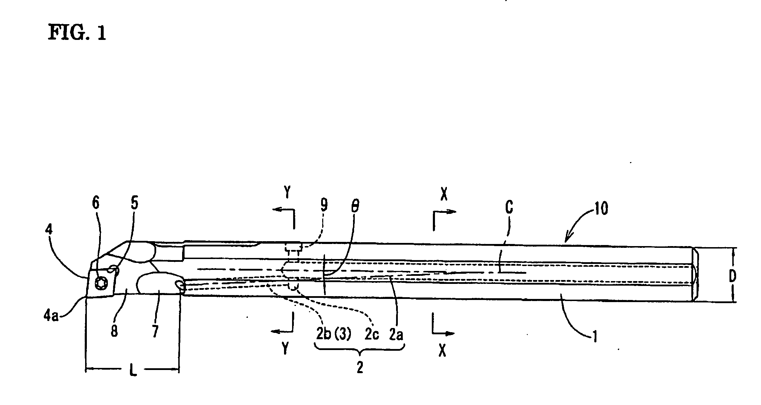

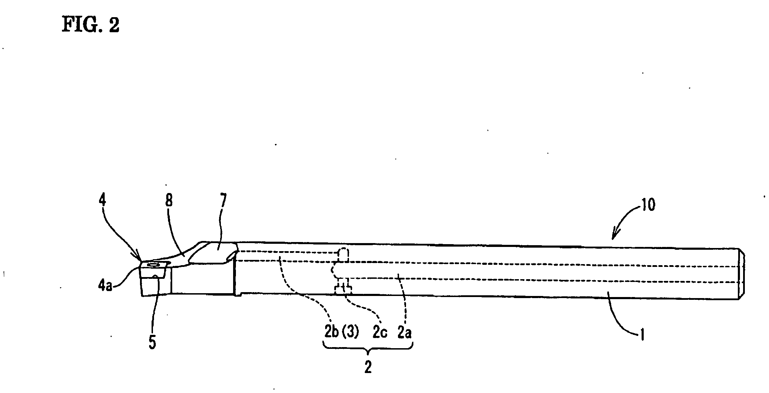

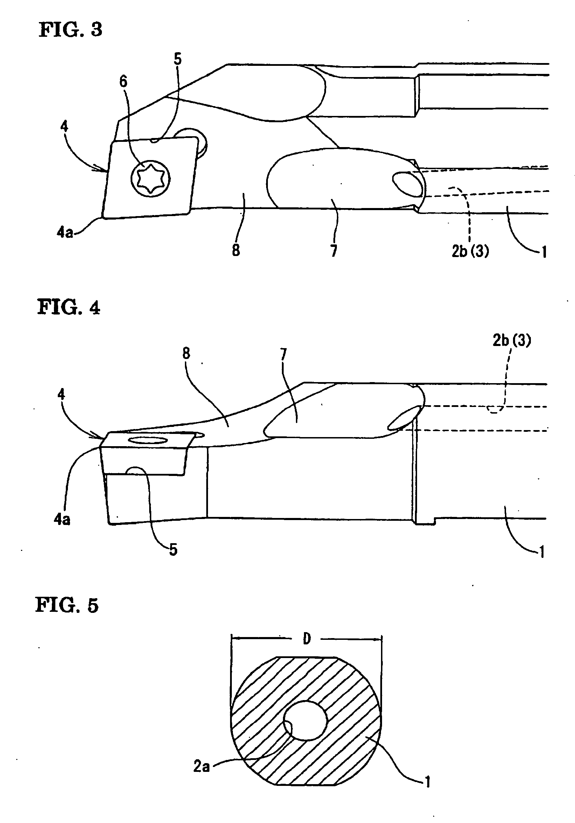

Based on Fig. 1 through Fig. 9, embodiments of the boring tool of the present invention will be described. The boring tool of the example is a boring tool with a replaceable blade. A cutting tool 4 is removably attached using a clamp screw 6 to a base groove 5 provided at the tip of a shank (holder) 1.

The boring tool includes a coolant hole 2 formed from three holes: a main hole 2a, a secondary hole 2b, and a communicating hole 2c. The main hole 2a of the coolant hole 2 is open toward the rear surface of the shank 1 and is formed at the center of the shank. The main hole 2a extends along a region from the rear end of the shank 1 to an intermediate position along the longitudinal direction of the shank. The back end of the hole is positioned far from the tip of the shank 1. Referring to the plane drawing of the boring tool shown in Fig. 1, the secondary hole 2b is formed at a position toward the outer perimeter of the shank 1.

The secondary hole 2b, a hole that forms a spray opening 3, extends from near the back end of the main hole 2a toward the tip of the shank 1 and opens to the groove surface of a groove 7 provided at the outer perimeter of the shank. The groove 7 is continuous with a pocket 8 at the shank tip. Coolant sprayed from the spray opening 3 (the secondary hole 2b) passes through the groove 7 toward a cutting edge 4a of the cutting tool 4.

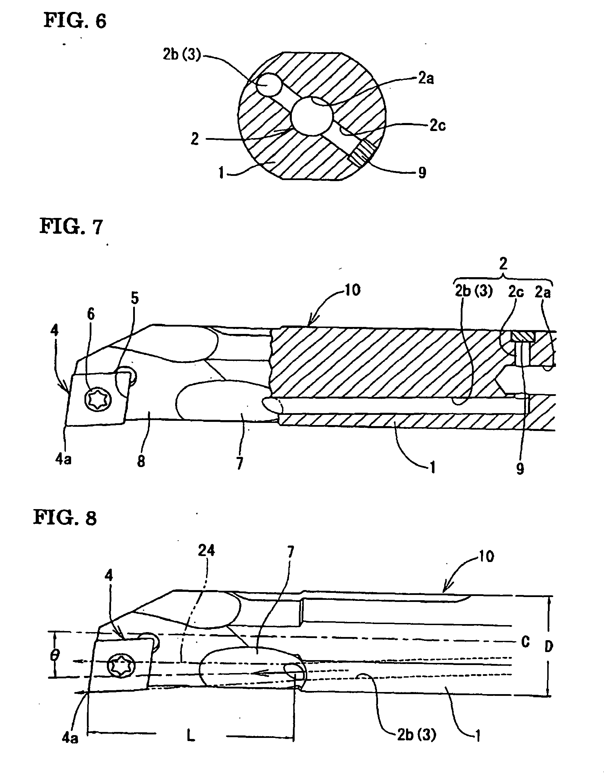

The communicating hole 2c is a hole provided to connect the back end of the main hole 2a and the front end of the secondary hole 2b. The communicating hole 2c is formed in a direction perpendicular to the axis from the outer perimeter of the shank. The open end (the entry opening of the hole) is covered by a plug 9 (see Fig. 6).

The spray opening 3 (the secondary hole 2b) is sloped at an angle θ relative to an axial center C of the shank 1 (see Fig. 8). If the slope angle θ of the spray opening 3 exceeds 10 deg, there is a greater chance for the flow of the sprayed coolant to split so that chips flow toward the belly side of the shank. Thus, the upper limit is set to 10 deg. It would be preferable for approximately 5 deg to be used. Also, the coolant flow can be prevented from splitting by setting the slope angle θ of the spray opening 3 to 0 deg. However, a θ that is too small makes it difficult to reliably blow the coolant to the cutting edge of the cutting tool 4. Thus, the boring tool according to the invention discloses a slope angle θ with a lower limit of 3 deg.

It would be preferable for the distance L from the cutting edge 4a of the cutting tool 4 to be 1.5 - 3 times a shank diameter D. Referring to Fig. 8, when this condition is met, as the coolant is sprayed from the spray opening 3 the width of a coolant 24 increases as it approaches the target point, as indicated by the dotted line with alternating long lines and two dotted lines. Thus, the spraying range of the coolant 24 for the generated chips is increased, making it possible to effectively spray away the chips. The distance L described above can be made, e.g., approximately 1/2D, but if this distance L is no more than 1.5D the coolant may not spread out as much as expected because the spray opening 3 is too close to the cutting edge 4a. Thus, it would be preferable for the distance L to be at least 1.5D. Also, if the distance L exceeds 3D, the distance between the spray opening 3 and the cutting edge 4a becomes too great, leading to a high pressure loss by the time the coolant reaches the cutting edge. Thus, the upper limit of the distance L is set to 3D.

While there are no design restrictions for the coolant hole 2 other than the slope angle θ of the spray opening 3 and the distance L from the cutting edge, it would be possible to have the main hole 2a and the secondary hole 2b connected by the communicating hole 2c. Then the coolant hole 2 shown in the figure, with the secondary hole acting as the spray opening 3 of the coolant hole, is able to more effectively prevent the coolant flow from being split. This is preferable because it also limits reductions in shank rigidity caused by forming the coolant hole.

It is possible to improve the prevention of coolant flow splitting by reducing the slope angle θ so that the spray opening 3 of the coolant hole 2 comes closer to the outer perimeter of the shank when the boring tool is seen from a plane view. However, if the coolant is introduced from the rear center of the shank 1 and the spray opening 3 is significantly far away from the shank center, the machining involved to make the small-diameter spray opening 3 communicate with the hole at the center of the shank becomes impractical because of the length.

Also, while it would be possible to reduce the length of the spray opening 3 by bringing the main hole 2a as close as possible to the tip of the shank 1 and having the spray opening 3 connected near the tip of the shank, this structure would result in the spray opening having a large slope angle θ relative to the axial center of the shank, which could lead to the coolant flow splitting. In contrast, with the coolant hole 2 of the example, the main hole 2a and the secondary hole 2b are connected with the communicating hole 2c so that the spray opening 3 can be brought closer to the outer perimeter of the shank (when seen from a plane view) without affecting the slope angle θ of the spray opening 3 at all. Thus, the slope angle θ can be made small so that prevention of coolant flow splitting can be improved. Also, the main hole 2a can be brought sufficiently away from the shank tip to limit the reduction in rigidity of the shank toward the tip caused by the formation of the main hole.

The cutting tool 4 that uses the cutting tool shown in the figure is a diamond-shaped cutting edge replaceable insert (throw-away insert), but the cutting tools that can be used is not restricted to what is shown in the figure. Also, the present invention can be implemented for boring tools other than those with replaceable cutting edges.

Fig. 9 shows how a boring tool 10 according to the present invention is used. When the boring tool 10 according to the present invention is used to cut the inner diameter of a hole 21 formed on the workpiece 20 as shown, the coolant flows in the direction A only, and the generated chips 23 are pushed by the current toward the spine of the shank 1 and are ejected. Thus, the chips are efficiently prevented from entering the belly side of the shank 1 and damage to the cut surface 22 caused by abrasion from the chips is eliminated.

Results from confirmation tests of the advantages of the present invention will be described.

### [First example]

In the tests, invention samples 1 - 6 were formed with different slope angles θ for the spray opening of the coolant hole relative to the axial center of the shank and different lengths L from the cutting edge of the cutting tool to the spray opening, these variations being within their respective valid ranges. In comparative samples 1 - 3, the slope angle θ of the spray opening and/or the distance L from the cutting edge to the spray opening were outside the valid range. The different aspects of the boring tools used are shown in the table.

The cutting conditions were as shown below. These are standard cutting condition used for inner diameter finishing.

Tool used: steel tool with a shank diameter of 12 mm (ISO model number S16M-SCLCR0602-14) with coolant hole added.

Cutting tool: diamond-shaped finishing insert with replaceable cutting edge, chip breaker for finishing, and a corner angle of 80 deg (ISO model number CCMT060204N).
Workpiece: SCr420 JIS, hole diameter 20 mm, hole depth 40 mm
Cutting rate: V=80 m/min
Feed: f=0.1 mm/rev
Cutting depth: d=0.2 mm

The tests were performed with standard coolant usage at a spray pressure of 0.5 MPa (Test 1) and with high-pressure coolant at a spray pressure of 2 MPa (Test 2), and the presence of flaws on the cut surface were checked after cutting. For the coolant, a soluble cutting fluid was used.

When generated chips enter into the belly side of the shank and abrade the cut surface, the sections with flaws on the cut surface show a white discoloration. The performance of the boring tool was evaluated based on the presence of discolorations. Tests were conducted ten times for each tool, and the number of times white discolorations due to flaws from chip abrasion on the cut surface appeared was studied. The values in the table indicate the number of times white discolorations were found out of ten tests.

Also, SCr420 has a relatively low hardness, so the cut surface can be easily damaged if abraded by chips. This SCr420 was selected as a workpiece since it is convenient for detecting the presence of chip abrasion. In addition, the size of the space formed between the spine side of the tool shank and the workpiece was designed so that chip abrasion would not take place, and the inner diameter of the hole to cut was set to 20 mm so that chip abrasion would only take place on the belly side of the shank.

The test results are shown in the table. As the results show, all of the invention samples showed a low number of chip abrasions compared to all of the comparative samples. In particular, in the Test 2 that used high-pressure coolant, there was no chip abrasion at all. Especially good results were obtained with the invention samples 3 - 5, in which the slope angle θ of the spray opening was 3 - 5 deg and the distance L from the cutting edge of the cutting tool to the spray opening was 1.5D - 3D. This is because the coolant was sprayed toward the cutting edge with a certain amount of width so that the chips could be effectively pushed forward.

**[Table]**

| Sample | Slope angle θ (deg) | Distance L (mm) | Test 1 (iterations) | Test 2 (iterations) |
|---|---|---|---|---|
| sample 1 | 0 | 2D | 1 | 0 |
| Invention sample 2 | 3 | 1D | 1 | 0 |
| Invention sample 3 | 3 | 3D | 0 | 0 |
| Invention sample 4 | 5 | 1.5D | 0 | 0 |
| Invention sample 5 | 5 | 3D | 0 | 0 |
| Invention sample 6 | 10 | 2D | 2 | 0 |
| Comparative sample 1 | 3 | 4D | 8 | 5 |
| Comparative sample 2 | 15 | 2D | 7 | 4 |
| Comparative sample 3 | 20 | 2D | 7 | 4 |

In the example described above, the coolant hole is formed by connecting the main hole 2a and the secondary hole 2b and the communicating hole 2c, but it would also be possible to use a structure that does not involve the communicating hole 2c. For example, it would be possible to form a coolant hole with no communicating hole by forming the coolant hole obliquely relative to the axial center of the shank and having the coolant hole offset ahead of time away from the shank center and toward the side at which the cutting tool is positioned. If the coolant hole is formed obliquely relative to the axial center of the shank, it would be possible, in addition to forming a diagonal hole, to cut the shank from a block formed with a hole having a diameter smaller than the shank diameter and to have the axial center of the shank formed obliquely relative to the axial center of the hole of the shank.

## Claims

1. A boring tool with coolant hole wherein: a coolant hole (2) supplying coolant is formed inside a shank (1); a spray opening (3) of said coolant hole (2) is positioned away from a center of said shank and toward a side on which a cutting tool (4) is provided; **characterised in that** said spray opening (3) is sloped, when said boring tool is seen from a plane view, relative to an axial center (C) of said shank at an angle of θ toward a cutting edge (4a); and said spray opening (3) is positioned so that a distance (L) from said cutting edge (4a) is no more than 3 times a diameter (D) of said shank, wherein said slope angle θ of said spray opening (3) relative to said axial center (C) of said shank is set to 3 - 10 deg.

2. A boring tool with coolant hole according to claim 1 wherein said spray opening (3) is, when said boring tool is seen from a plane view, positioned near an outer perimeter of said shank (1).

3. A boring tool with coolant hole according to claim 1 wherein said distance (L) from said cutting edge (4a) of said cutting tool to said spray opening (3) is 1.5 - 3 times said diameter (D) of said shank.

4. A boring tool with coolant hole according to any one of claim 1 through claim 3 wherein: said coolant hole (2) is formed from a main hole (2a) open toward a rear surface of said shank and positioned at a center of said shank, a secondary hole (2b) offset toward an outer perimeter of said shank, and a communicating hole (2c) formed from a side of said shank and with a covered open end; said main hole (2a) is extended from a rear end of said shank (1) to an intermediate position along a longitudinal axis of said shank; an end of said secondary hole (2b) communicates with a rear end side of said main hole (2a) by way of said communicating hole (2c); said secondary hole (2b) serves as said spray opening (3) of said coolant opening.

## Patentansprüche

1. Bohrwerkzeug mit Kühlmittelloch, wobei:
ein Kühlmittelloch (2), das Kühlmittel zuführt, im Inneren eines Schaftes (1) ausgebildet ist;
eine Sprühöffnung (3) des Kühlmittellochs (2) von einer Mitte des Schaftes entfernt und zu einer Seite hin positioniert ist, an der ein Schneidwerkzeug (4) vorhanden ist,
**dadurch gekennzeichnet, dass**
die Sprühöffnung (3), bei Betrachtung des Bohrwerkzeugs in Draufsicht, relativ zu einer axialen Mitte (C) des Schaftes in einem Winkel θ zu einer Schneidkante (4a) geneigt ist und die Sprühöffnung (3) so positioniert ist, dass ein Abstand (L) von der Schneidkante (4a) nicht mehr als das Dreifache eines Durchmessers (D) des Schaftes beträgt, wobei der Neigungswinkel θ der Sprühöffnung (3) relativ zu der axialen Mitte (C) des Schaftes auf 3-10° eingestellt ist.

2. Bohrwerkzeug mit Kühlmittelloch nach Anspruch 1, wobei die Sprühöffnung (3), bei Betrachtung des Bohrwerkzeugs in Draufsicht, in der Nähe eines Außenumfangs des Schaftes (1) positioniert ist.

3. Bohrwerkzeug mit Kühlmittelloch nach Anspruch 1, wobei der Abstand (L) von der Schneidkante (4a) des Schneidwerkzeugs zu der Sprühöffnung (3) das 1,5 - 3-fache des Durchmessers (D) des Schaftes beträgt.

4. Bohrwerkzeug mit Kühlmittelloch nach einem der Ansprüche 1 bis 3, wobei:
das Kühlmittelloch (2) von einem Hauptloch (2a) aus ausgebildet ist, das zu einer hinteren Fläche des Schaftes hin offen ist und in einer Mitte des Schaftes positioniert ist, ein sekundäres Loch (2b) zu einem Außenumfang des Schaftes hin versetzt ist, und ein Verbindungsloch (2c) von einer Seite des Schaftes her ausgebildet ist und ein abgedecktes offenes Ende hat, sich das Hauptloch (2a) von einem hinteren Ende des Schaftes (1) zu einer Zwischenposition entlang einer Längsachse des Schaftes erstreckt, ein Ende des sekundären Lochs (2b) über das Verbindungsloch (2c) mit einer hinteren Abschlussseite des Hauptlochs (2a) in Verbindung steht und das sekundäre Loch (2b) als die Sprühöffnung (3) der Kühlmittelöffnung dient.

## Revendications

1. Outil de perçage avec un trou pour fluide de refroidissement, dans lequel : un trou pour fluide de refroidissement (2) qui amène un fluide de refroidissement est formé dans une tige (1) ; une ouverture de pulvérisation (3) du trou pour fluide de refroidissement (2) est placée loin d'un centre de la tige et en direction d'un côté sur lequel est prévu un outil de coupe (4) ; **caractérisé en ce que** l'ouverture de pulvérisation (3) est inclinée, si on regarde l'outil de perçage sur une vue en plan, par rapport à un centre axial (C) de la tige suivant un angle θ en direction d'une arête coupante (4a) ; et l'ouverture de pulvérisation (3) est placée de telle sorte qu'une distance (L) par rapport à l'arête coupante (4a) ne soit pas supérieure à 3 fois un diamètre (D) de la tige, l'angle d'inclinaison θ de l'ouverture de pulvérisation (3) par rapport au centre axial (C) de la tige étant fixé à 3-10 degrés.

2. Outil de perçage avec un trou pour fluide de refroidissement selon la revendication 1, dans lequel l'ouverture de pulvérisation (3), si on regarde l'outil de perçage sur une vue en plan, est placée près d'un périmètre extérieur de la tige (1).

3. Outil de perçage avec un trou pour fluide de refroidissement selon la revendication 1, dans lequel la distance (L) entre l'arête coupante (4a) de l'outil de coupe et l'ouverture de pulvérisation (3) est égale à 1,5-3 fois le diamètre (D) de la tige.

4. Outil de perçage avec un trou pour fluide de refroidissement selon l'une quelconque des revendications 1 à 3, dans lequel : le trou pour fluide de refroidissement (2) est formé à partir d'un trou principal (2a) ouvert en direction d'une surface arrière de la tige et placé au niveau d'un centre de la tige, d'un trou secondaire (2b) décalé en direction d'un périmètre extérieur de la tige, et d'un trou de communication (2c) formé à partir d'un côté de la tige et avec une extrémité ouverte couverte ; le trou principal (2a) s'étend d'une extrémité arrière de la tige (1) jusqu'à une position intermédiaire le long d'un axe longitudinal de la tige ; une extrémité du trou secondaire (2b) communique avec un côté d'extrémité arrière du trou principal (2a) grâce au trou de communication (2c) ; le trou secondaire (2b) sert d'ouverture de pulvérisation (3) de l'ouverture pour fluide de refroidissement.
